# EUROPÄISCHE PATENTANMELDUNG

(11) **EP 3 121 567 A1**
(43) Veröffentlichungstag der Anmeldung: **25.01.2017**
(21) Anmeldenummer: 15177881.8
(22) Anmeldetag: 22.07.2015
(51) Int. Cl.: G01F 23/20, G01N 35/10, G01N 35/00, G01G 3/02

(54) **VORRICHTUNG ZUR FÜLLSTANDBESTIMMUNG**

(71) Anmelder: Siemens Healthcare Diagnostics Products GmbH, 35041 Marburg (DE)
(72) Erfinder: Kalbfell, Heiko, 65232 Taunusstein (DE); Zillikens, Sabine, 65830 Kriftel (DE)

(57) **Zusammenfassung**

Die Erfindung betrifft eine Vorrichtung 1 zur Füllstandmessung eines Füllmediums in einem Behälter 2, bei der anhand der Änderung der Gewichtskraft des Behälters 2 der Füllstand der enthaltenen Flüssigkeit bestimmt werden kann. Die Vorrichtung 1 umfasst eine Aufnahmevorrichtung mit einer Umwandung 4 zur Aufnahme des Behälters 2, einen in der Aufnahmevorrichtung vertikal beweglich angeordneten Träger 5, ein elastisches Rückstellelement 6 und einen Sensor 8 zur Detektion einer Vertikalbewegung des Trägers 5.

## Beschreibung

Die vorliegende Erfindung liegt auf dem Gebiet der automatischen Analysegeräte und betrifft eine Vorrichtung zur Füllstandmessung eines Füllmediums in einem Behälter.

Heutige Analysegeräte, wie sie routinemäßig in der Analytik, der Forensik, der Mikrobiologie und der klinischen Diagnostik Verwendung finden, sind in der Lage, eine Vielzahl von Nachweisreaktionen und Analysen mit einer Vielzahl von Proben durchzuführen. Um eine Vielzahl von Untersuchungen automatisiert durchführen zu können, sind diverse automatisch arbeitende Vorrichtungen zum räumlichen Transfer von Messzellen, Reaktionsbehältern und Reagenzflüssigkeitsbehältern, wie z.B. Transferarme mit Greiffunktion, Transportbänder oder drehbare Transporträder, sowie Vorrichtungen zum Transfer von Flüssigkeiten, wie z.B. Pipettiervorrichtungen in einem Gerätegehäuse untergebracht. Die Geräte umfassen eine zentrale Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Besonders verbreitet sind Messsysteme, die auf photometrischen (z.B. turbidimetrischen, nephelometrischen, fluorometrischen oder luminometrischen) oder radiometrischen Messprinzipien beruhen. Diese Verfahren ermöglichen den qualitativen und quantitativen Nachweis von Analyten in flüssigen Proben, ohne zusätzliche Trennschritte vorsehen zu müssen. Die Bestimmung klinisch relevanter Parameter, wie zum Beispiel der Konzentration oder der Aktivität eines Analyten erfolgt vielfach, indem ein Aliquot einer Körperflüssigkeit eines Patienten gleichzeitig oder nacheinander mit einem oder mehreren Testreagenzien in einem Reaktionsgefäß vermischt wird, wodurch eine biochemische Reaktion in Gang gesetzt wird, die eine messbare Veränderung einer optischen Eigenschaft des Testansatzes bewirkt.

Das Messergebnis wird von dem Messsystem wiederum in eine Speichereinheit weitergeleitet und ausgewertet. Anschließend liefert das Analysegerät einem Benutzer über ein Ausgabemedium, wie z.B. einen Monitor, einen Drucker oder eine Netzwerkverbindung probenspezifische Messwerte.

Für den Betrieb verschiedener Funktionseinheiten eines Analysegerätes ist die Handhabung relativ großer Flüssigkeitsmengen erforderlich. Pipettiernadeln müssen beispielsweise nach jedem Kontakt mit einer Reagenz- oder Probenflüssigkeit gereinigt werden. Dazu sind in dem Analysegerät häufig Waschbrunnen vorgesehen, die kontinuierlich mit frischer Waschlösung versorgt werden. Damit das Analysegerät über einen möglichst langen Zeitraum unbeaufsichtigt betrieben werden kann, wird die Waschlösung je nach Auslegung des Analysegeräts in 0,2 bis 2 Liter fassenden Behältern vorrätig gehalten. Der Flüssigkeitsabfall wird in Behältern gesammelt, die zwischen 5 und 20 Liter fassen. Wasser ist eine weitere Flüssigkeit, die in einem Analysegerät häufig in größeren Mengen benötigt wird, beispielsweise zu Reinigungszwecken oder als Lösungsmittel für lyophilisierte Reagenzien oder auch als Hydraulikflüssigkeit, und wird daher ebenfalls in relativ großvolumigen Behältern im Analysegerät gelagert.

Um frühzeitig erkennen zu können, ob ein Flüssigkeitsvorrat in einem Behälter zur Neige geht oder ob der maximale Füllstand in einem Abfallbehälter erreicht wird, sind an den Flüssigkeitsbehältern üblicherweise Füllstandsensoren angebracht. Besonders bevorzugt sind kapazitive Füllstandsensoren, die an der Außenseite des Behälters angebracht sind, weil sie eine nicht-invasive und überdies sehr präzise Messung des Füllstandes einer Flüssigkeit im Behälterinneren ermöglichen. Ein derartiger Füllstandsensor ist beispielsweise in EP-A1-2400275 beschrieben. Der Füllstandsensor umfasst u.a. mehrere Elektroden, die eine Messfläche bilden und demgemäß als Sensorfolie ausgestaltet sein können. Die vertikale Ausdehnung der Messfläche definiert den Bereich in dem verschiedene Füllstände gemessen werden können.

Die großvolumigen Behälter für die sogenannten Systemflüssigkeiten, wie beispielsweise Wasser oder Waschlösungen, und auch die Behälter für die Sammlung von Flüssigabfällen werden üblicherweise in einer oder mehreren Kammern im unteren Bereich des Gerätegehäuses untergebracht. Um einem Benutzer des Analysegeräts den Austausch der im gefüllten Zustand verhältnismäßig schweren Flüssigkeitsbehälter zu erleichtern, sind die Kammern zur Lagerung der Behälter häufig als herausziehbare Schublade ausgelegt. Nach dem Herausziehen der Schublade kann ein Behälter einfach senkrecht nach oben angehoben oder seitlich herausgezogen werden, ohne dass sich der Benutzer tief bücken und in die Kammer greifen muss.

Problematisch ist jedoch, dass beim Herausziehen einer Schublade die Flüssigkeit in den Behältern in Bewegung gerät und die Behälterinnenwand unkontrolliert mit Flüssigkeit benetzt wird. Dies hat zur Folge, dass die kapazitive Messung des Füllstands beeinträchtigt wird, und die Gefahr besteht, dass ein falsch zu hoher Füllstand gemessen wird. Dadurch kann es passieren, dass ein quasi leerer Behälter nicht erkannt wird und der Austausch nicht rechtzeitig erfolgt, was wiederum zu einer Unterbrechung des Betriebs des gesamten Analysegeräts führen würde.

Der vorliegenden Erfindung liegt daher die Aufgabe zugrunde, Mittel bereit zu stellen, die eine zuverlässige Füllstandbestimmung in Flüssigkeitsbehältern auch dann sicher stellen, wenn der Flüssigkeitsbehälter gelegentlich bewegt wird.

Die Aufgabe wird erfindungsgemäß dadurch gelöst, dass der Flüssigkeitsbehälter in einer Vorrichtung angeordnet wird, mit der anhand der Änderung der Gewichtskraft des Behälters der Füllstand der enthaltenen Flüssigkeit bestimmt werden kann. Dies eliminiert das Risiko einer fehlerhaften, kapazitiven Füllstandbestimmung infolge von geringfügigen Flüssigkeitsanhaftungen an der Behälterinnenwand.

Gegenstand der vorliegenden Erfindung ist eine Vorrichtung zur Füllstandmessung eines Füllmediums in einem Behälter, die Vorrichtung aufweisend:
- eine Aufnahmevorrichtung mit einer Umwandung zur Aufnahme eines Behälters,
- ein in der Aufnahmevorrichtung vertikal beweglich angeordneter Träger zur Lagerung des Behälters,
- ein elastisches Rückstellelement, auf dem der Träger gelagert ist, und
- einen Sensor zur Detektion einer Vertikalbewegung des Trägers.

Wird ein leerer Behälter in der Vorrichtung positioniert, bewirkt eine zunehmende Befüllung des Behälters mit einem Füllmedium eine Zunahme der Gewichtskraft des Behälters, die der Rückstellkraft des elastischen Rückstellelements entgegenwirkt, wodurch sich der auf dem elastischen Rückstellelement gelagerte Träger zunehmend nach unten bewegt. Wird ein vollständig oder teilweise gefüllter Behälter in der Vorrichtung positioniert, bewirkt die Entnahme von Füllmedium eine Abnahme der Gewichtskraft des Behälters, die der Rückstellkraft des elastischen Rückstellelements entgegenwirkt, wodurch sich der auf dem elastischen Rückstellelement gelagerte Träger zunehmend nach oben bewegt.

Der Begriff "Füllmedium" umfasst z.B. Flüssigkeiten, wie z.B. Wasser, Waschlösungen oder Flüssigabfälle, Suspensionen, also Stoffgemische aus einer Flüssigkeit und darin fein verteilter Feststoffpartikel, Granulate oder andere formunbeständige Medien.

Der Begriff "Behälter" umfasst u.a. Kanister oder Flaschen aus Kunststoff oder Glas.

Die Aufnahmevorrichtung zur Aufnahme eines Behälters weist vorzugsweise eine Umwandung auf, die der äußeren Form des Behälters angepasst ist. Behälter für Füllmedien haben üblicherweise die Form eines stehenden Zylinders, d.h. für Behälter mit einem kreiszylindrischen Querschnitt ist die Umwandung ebenfalls kreiszylindrisch geformt, für Behälter mit einem viereckigen Querschnitt ist Umwandung viereckig geformt u.s.w. Dies gewährleistet eine sichere Führung des Behälters und verhindert ein Kippen des Behälters während der Auf- oder Abwärtsbewegung des Behälters. Die Aufnahmevorrichtung zur Aufnahme eines Behälters bzw. die eine Umwandung kann aus Kunststoff oder auch aus Metall bestehen.

Der in der Aufnahmevorrichtung vertikal beweglich angeordnete Träger zur Lagerung des Behälters ist im einfachsten Fall eine ebene Platte, beispielsweise aus Kunststoff oder Metall, deren Oberflächenform und -größe der Grundflächenform und -größe des aufzunehmenden Behälters angepasst ist. Auch in Bezug auf die Umwandung der Aufnahmevorrichtung ist die Oberflächenform und -größe des Trägers derart angepasst, dass eine möglichst reibungsfreie Auf- und Abwärtsbewegung des Trägers in der Aufnahmevorrichtung möglich ist. Zusätzlich können im Randbereich des Trägers mehrere Einbuchtungen vorgesehen sein, vorzugsweise wenn auf der Innenseite der Umwandung der Aufnahmevorrichtung mehrere in vertikaler Richtung verlaufende Führungsprofile vorgesehen sind, die formschlüssig in die Einbuchtungen eingreifen. Dies verhindert eine Rotationsbewegung des Trägers und gewährleistet somit eine besonders sichere Führung und eine gleichförmige Auf- und Abwärtsbewegung des Trägers in der Aufnahmevorrichtung.

Die Rückstellkraft des elastischen Rückstellelements, auf dem der Träger gelagert ist, ist idealerweise so gewählt, dass sie etwa der Gewichtskraft des Behälters im leeren Zustand entspricht.

Ein geeignetes Rückstellelement ist beispielsweise eine Spiralfeder, eine Gasdruckfeder oder ein elastisches Gummielement. Alternativ kann auch eine Mehrzahl von Spiralfedern, von Gasdruckfedern oder von elastischen Gummielementen oder auch eine Kombination davon, wie beispielsweise eine Kombination einer oder mehrerer Spiralfedern mit einem oder mehreren Gummielementen, ein geeignetes Rückstellelement bilden.

In einer bevorzugten Ausführungsform ist das elastische Rückstellelement von einer hülsenförmigen Umwandung umgeben, und auf der Unterseite des Trägers ist ein hülsenförmiger Fortsatz vorgesehen, wobei die hülsenförmige Umwandung des Rückstellelements und der hülsenförmige Fortsatz an dem Träger formschlüssig ineinandergreifen können. Dies gewährleistet eine besonders sichere Führung des Trägers und eine gleichförmige Auf- und Abwärtsbewegung des Trägers in der Aufnahmevorrichtung.

Der Sensor zur Detektion einer Vertikalbewegung des Trägers kann beispielsweise ein Kraftsensor oder ein Bewegungssensor sein.

Beispielsweise kann die Vertikalbewegung des Trägers infolge einer Zunahme oder einer Abnahme eines Füllmediums in dem Behälter, aufgrund der Einwirkung einer zunehmenden oder abnehmenden Gewichtskraft des Trägers auf einen Kraftaufnehmer, wie beispielsweise einen Federkörper, indirekt gemessen werden. Die Verformung des Federkörpers kann über Dehnungsmessstreifen, deren elektrischer Widerstand sich mit der Dehnung ändert, in die Änderung einer elektrischen Spannung umgewandelt werden. Über einen Messverstärker kann die elektrische Spannung und damit die Dehnungsänderung registriert werden. Eine besonders einfache Variante eines Kraftsensors ist ein Biegebalken, an dem Dehnungsmessstreifen befestigt sind. Der elastische Balken kann beispielsweise unterhalb des Trägers auf der Innenseite der Umwandung der Aufnahmevorrichtung angeordnet sein, so dass eine maximale Biegung des Balkens entsteht, wenn in der Vorrichtung ein Behälter, der einen maximalen Füllstand des Füllmediums aufweist, positioniert ist und der Träger oder eine an dem Träger befestigte Fahne Kraft auf den Balken ausübt.

Alternativ kann die Vertikalbewegung des Trägers infolge einer Zunahme oder einer Abnahme eines Füllmediums in einem Behälter, direkt mit einem Bewegungssensor gemessen werden. Dazu eignen sich insbesondere optische Sensoren, wie beispielsweise Lichtschranken. Ein oder mehrere Lichtschranken können entlang des Weges des Trägers oder auch unterhalb des Trägers auf der Innenseite der Umwandung der Aufnahmevorrichtung angeordnet sein, so dass eine Unterbrechung eines Lichtstrahls erkannt und als elektrisches Signal anzeigt wird, wenn beispielsweise in der Vorrichtung ein Behälter, der einen maximalen Füllstand des Füllmediums aufweist, positioniert ist und eine an dem Träger befestigte Fahne den Lichtstrahl unterbricht. Ebenfalls geeignet sind Sensoren für magnetische Flussdichten, wie beispielsweise Hall-Sensoren. Ein oder mehrere stromdurchflossene Hall-Sensoren können entlang des Weges des Trägers oder auch unterhalb des Trägers auf der Innenseite der Umwandung der Aufnahmevorrichtung angeordnet sein, so dass ein mit dem Träger verbundener Magnet eine Spannung erzeugt, die proportional zum Produkt aus magnetischer Feldstärke und Strom ist, und wobei sich die Spannung mit der Entfernung des Magneten vom Sensor, also mit der Bewegung des Trägers verändert.

Ebenfalls geeignet sind Mikroschalter. Ein oder mehrere Mikroschalter können entlang des Weges des Trägers oder auch unterhalb des Trägers auf der Innenseite der Umwandung der Aufnahmevorrichtung angeordnet sein, so dass der Träger oder eine an dem Träger befestigte Fahne in einer bestimmten Position des Trägers eine Kraft auf den oder die Mikroschalter ausübt.

Ein weiterer Gegenstand der vorliegenden Erfindung ist ein Verfahren zum Messen des Füllstands eines Füllmediums in einem Behälter, wobei der Behälter in einer erfindungsgemäßen Vorrichtung zur Füllstandmessung angeordnet wird und die Vertikalbewegung des Trägers gemessen wird.

Die Erfindung betrifft ferner ein automatisches Analysegerät mit einem Gerätegehäuse mit mindestens einer Kammer zur Aufnahme von Flüssigkeitsbehältern, wobei in der Kammer mindestens eine erfindungsgemäße Vorrichtung zur Füllstandmessung vorgesehen ist.

Bevorzugterweise ist in der Vorrichtung zur Füllstandmessung ein Flüssigkeitsbehälter gelagert.

Die Kammer zur Aufnahme von Flüssigkeitsbehältern kann als Schublade ausgelegt sein, die horizontal aus dem Analysegerät herausziehbar ist. Alternativ kann die Kammer durch eine Anschlagtür verschließbar sein, wobei der Flüssigkeitsbehälter in der Vorrichtung zur Füllstandmessung auf einem auf der Innenseite der Tür angebrachten Regalboden gelagert ist.

Bevorzugterweise können in der Kammer des Analysegeräts mehrere erfindungsgemäße Vorrichtungen zur Füllstandmessung in jeweils einem Flüssigkeitsbehälter vorgesehen sein.

In einer Ausführungsform des erfindungsgemäßen Analysegeräts ist an einem in dem Gerät in einer erfindungsgemäßen

Vorrichtung zur Füllstandmessung gelagerten Flüssigkeitsbehälter eine Vorrichtung zur Entnahme von Flüssigkeit aus dem Flüssigkeitsbehälter angebracht. Vorzugsweise umfasst eine derartige Vorrichtung zur Entnahme von Flüssigkeit ein mit einer Pumpe verbundenes Saugrohr, das in das Behälterinnere eingeführt ist. Insbesondere Flüssigkeitsbehälter, die Flüssigkeiten enthalten, die für den Betrieb des Analysegeräts benötigt werden, wie z.B. Wasser, Waschlösungen etc., sind mit einer Vorrichtung zur Entnahme von Flüssigkeit ausgestattet.

In einer weiteren Ausführungsform des erfindungsgemäßen Analysegeräts ist an einem in dem Gerät in einer erfindungsgemäßen Vorrichtung zur Füllstandmessung gelagerten Flüssigkeitsbehälter eine Vorrichtung zur Abgabe von Flüssigkeit in den Flüssigkeitsbehälter angebracht. Eine derartige Vorrichtung zur Abgabe von Flüssigkeit umfasst mindestens ein Rohr, das in das Behälterinnere eingeführt ist. Insbesondere Flüssigkeitsbehälter, die flüssige Abfälle sammeln, die beim Betrieb des Analysegeräts anfallen, wie z.B. benutzte Waschlösungen etc., sind mit einer Vorrichtung zur Abgabe von Flüssigkeit ausgestattet.

Die Erfindung wird im Folgenden anhand einer Zeichnung erläutert.

Darin zeigen
- FIG. 1: eine erfindungsgemäße Vorrichtung 1 zur Füllstandmessung, in der ein teilweise gefüllter Flüssigkeitsbehälter 2 steht;
- FIG. 2: einen vergrößerten Ausschnitt aus FIG. 1; und
- FIG. 3: eine Teilansicht eines Analysegeräts 20 mit einer Schublade 21, in der zwei erfindungsgemäße Vorrichtungen 1 zur Füllstandmessung mit Flüssigkeitsbehältern 2 angeordnet sind.

### FIGURENBESCHREIBUNG

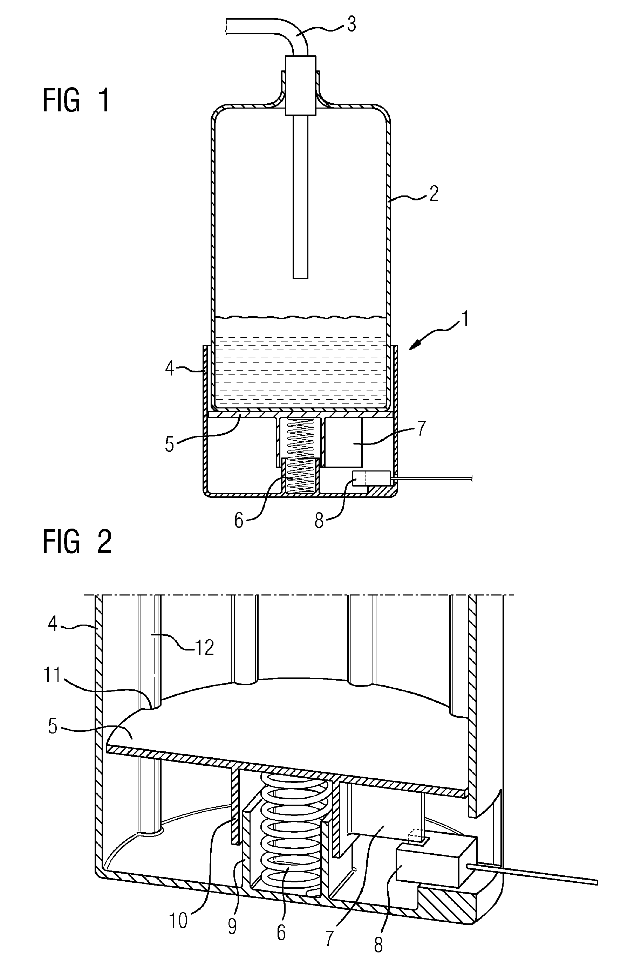

FIG. 1 zeigt einen Längsschnitt durch eine erfindungsgemäße Vorrichtung 1 zur Füllstandmessung, in der ein bereits teilweise gefüllter Flüssigkeitsbehälter 2 mit einem Fassungsvolumen von zwei Litern zur Sammlung von Flüssigkeitsabfällen positioniert ist. In den Flüssigkeitsbehälter 2 ragt ein Rohr 3, durch welches Flüssigkeit in den Behälter 2 geleitet wird. Die Vorrichtung 1 zur Füllstandmessung umfasst eine Aufnahmevorrichtung mit einer Umwandung 4, in der der Flüssigkeitsbehälter 2 gelagert ist. In der Aufnahmevorrichtung ist eine Trägerplatte 5 angeordnet, auf der der Flüssigkeitsbehälter 2 steht. Die Trägerplatte 5 ist auf einer Spiralfeder 6 gelagert, die mit zunehmender Befüllung des Flüssigkeitsbehälters 2, also bei zunehmender Gewichtskraft nachgibt, so dass sich die Trägerplatte 5 mit dem Flüssigkeitsbehälter 2 abwärts bewegt. An der Unterseite des Trägers 5 ist eine Fahne 7 angebracht, die bei Erreichung des maximal erwünschten Füllstandes im Flüssigkeitsbehälter 2 in die Lichtschranke eines Lichtschrankensensors 8 gelangt und ein Signal erzeugt.

FIG. 2 zeigt einen vergrößerten Ausschnitt der erfindungsgemäßen Vorrichtung 1 zur Füllstandmessung aus FIG. 1, allerdings ohne Flüssigkeitsbehälter 2. Die Spiralfeder 6 ist von einer hülsenförmigen Umwandung 9 umgeben, und auf der Unterseite der Trägerplatte 5 ist ein hülsenförmiger Fortsatz 10 vorgesehen, so dass die hülsenförmige Umwandung 9 und der hülsenförmige Fortsatz 10 formschlüssig ineinandergreifen können. Dies gewährleistet eine stabile Führung der Trägerplatte 5 während der Abwärtsbewegung eines Flüssigkeitsbehälters. Die Führung der Trägerplatte 5 wird weiterhin dadurch verbessert, dass auf der Innenseite der Umwandung 4 der Aufnahmevorrichtung mehrere in vertikaler Richtung verlaufende Führungsprofile 12 vorgesehen sind, die formschlüssig in Einbuchtungen 11 eingreifen, die im Randbereich der Trägerplatte 5 vorgesehen sind.

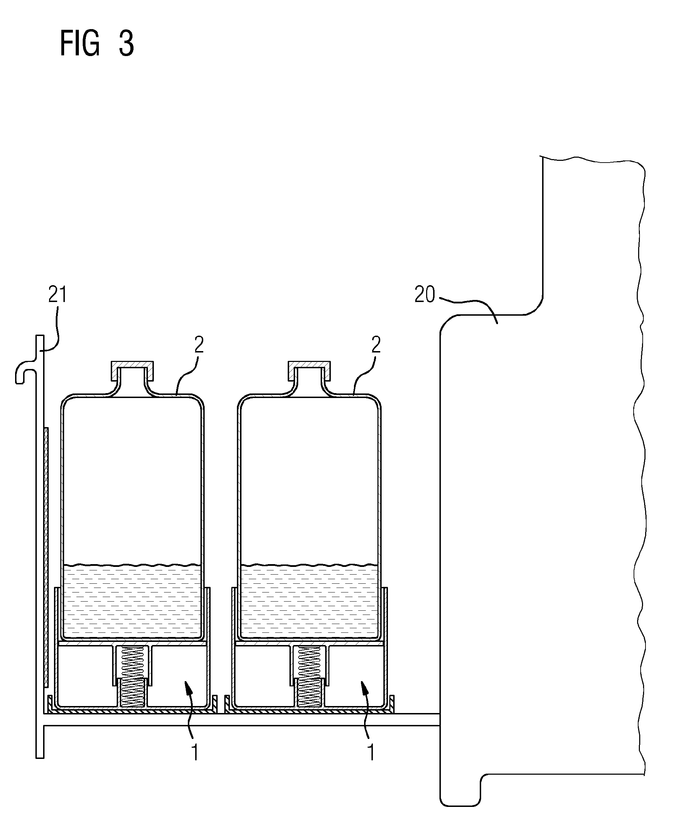

FIG. 3 zeigt eine Teilansicht eines Analysegeräts 20 mit einer horizontal aus dem Analysegerät 20 herausgezogenen Schublade 21. In der Schublade 21 befinden sich zwei Vorrichtungen 1 zur Füllstandmessung, in denen sich zwei Flüssigkeitsbehälter 2 wie in FIG. 1 dargestellt befinden.

### BEZUGSZEICHENLISTE

- 1: Vorrichtung zur Füllstandbestimmung
- 2: Flüssigkeitsbehälter
- 3: Rohr
- 4: Umwandung
- 5: Trägerplatte
- 6: Spiralfeder
- 7: Fahne
- 8: Lichtschrankensensor
- 9: Hülsenförmige Umwandung
- 10: Hülsenförmiger Fortsatz
- 11: Einbuchtung
- 12: Führungsprofil
- 20: Analysegerät
- 21: Schublade

## Patentansprüche

1. Vorrichtung (1) zur Füllstandmessung eines Füllmediums in einem Behälter (2), die Vorrichtung aufweisend:
• eine Aufnahmevorrichtung mit einer Umwandung (4) zur Aufnahme eines Behälters (2),
• ein in der Aufnahmevorrichtung vertikal beweglich angeordneter Träger (5) zur Lagerung des Behälters (2),
• ein elastisches Rückstellelement (6), auf dem der Träger (5) gelagert ist, und
• einen Sensor (8) zur Detektion einer Vertikalbewegung des Trägers (5).

2. Vorrichtung (1) gemäß Anspruch 1, wobei das elastische Rückstellelement (6) von einer hülsenförmigen Umwandung (9) umgeben ist und wobei auf der Unterseite des Trägers (5) ein hülsenförmiger Fortsatz (10) vorgesehen ist und wobei die hülsenförmige Umwandung (9) und der hülsenförmige Fortsatz (10) formschlüssig ineinandergreifen können.

3. Vorrichtung (1) gemäß einem der vorhergehenden Ansprüche, wobei im Randbereich des Trägers (5) mehrere Einbuchtungen (11) vorgesehen sind und wobei auf der Innenseite der Umwandung (4) der Aufnahmevorrichtung mehrere in vertikaler Richtung verlaufende Führungsprofile (12) vorgesehen sind, die formschlüssig in die Einbuchtungen (11) eingreifen.

4. Vorrichtung (1) gemäß einem der vorhergehenden Ansprüche, wobei die Rückstellkraft des elastischen Rückstellelements (6) so gewählt ist, dass sie etwa der Gewichtskraft des Behälters (2) im leeren Zustand entspricht.

5. Vorrichtung (1) gemäß einem der vorhergehenden Ansprüche, wobei das elastische Rückstellelement (6) eine Spiralfeder, eine Gasdruckfeder oder ein Gummielement ist.

6. Vorrichtung (1) gemäß einem der vorhergehenden Ansprüche, wobei der Sensor (8) zur Detektion einer Vertikalbewegung des Trägers ein Kraftsensor oder ein Bewegungssensor ist.

7. Verfahren zum Messen des Füllstands eines Füllmediums in einem Behälter (2), wobei das Verfahren folgende Schritte umfasst:
• Anordnen des Behälters (2) in einer Vorrichtung (1) gemäß einem der vorhergehenden Ansprüche, und
• Messen der Vertikalbewegung des Trägers (5).

8. Automatisches Analysegerät (20) mit einem Gerätegehäuse mit mindestens einer Kammer zur Aufnahme von Flüssigkeitsbehältern (2), **dadurch gekennzeichnet, dass** in der Kammer mindestens eine Vorrichtung (1) zur Füllstandmessung gemäß einem der vorhergehenden Ansprüche vorgesehen ist.

9. Automatisches Analysegerät (20) gemäß Anspruch 8, **dadurch gekennzeichnet, dass** ein Flüssigkeitsbehälter (2) in der Vorrichtung (1) zur Füllstandmessung gelagert ist.

10. Automatisches Analysegerät (20) gemäß einem der Ansprüche 8 und 9, wobei die Kammer als Schublade (21) ausgelegt ist, die horizontal aus dem Analysegerät (20) herausziehbar ist.

11. Automatisches Analysegerät (20) gemäß einem der Ansprüche 8 bis 10, wobei die Kammer durch eine Anschlagtür verschließbar ist und wobei der Flüssigkeitsbehälter (2) in der Vorrichtung (1) zur Füllstandmessung auf einem auf der Innenseite der Tür angebrachten Regalboden gelagert ist.

12. Automatisches Analysegerät (20) gemäß einem der Ansprüche 8 bis 11, wobei eine Vorrichtung zur Entnahme von Flüssigkeit aus dem Flüssigkeitsbehälter (2) an dem Flüssigkeitsbehälter (2) angebracht ist.

13. Automatisches Analysegerät (20) gemäß einem der Ansprüche 8 bis 12, wobei eine Vorrichtung (3) zur Abgabe von Flüssigkeit in den Flüssigkeitsbehälter (2) an dem Flüssigkeitsbehälter (2) angebracht ist.
